# EUROPEAN PATENT SPECIFICATION

(11) **EP 1 670 104 B1**
(45) Date of publication and mention of the grant of the patent: **09.07.2008**
(21) Application number: 04702820.4
(22) Date of filing: 16.01.2004
(51) Int. Cl.: H01S 3/0941, H01S 3/06

(54) **SOLID-STATE LASER PUMPED MODULE AND LASER OSCILLATOR**
MIT EINEM FESTKÖRPERLASER GEPUMPTES MODUL UND LASEROSZILLATOR
MODULE POMPE DE LASER A SEMI-CONDUCTEUR ET OSCILLATEUR LASER

(43) Date of publication of application: 14.06.2006
(73) Proprietor: MITSUBISHI DENKI KABUSHIKI KAISHA, Chiyoda-ku, Tokyo 100-8310 (JP)
(72) Inventor: YANAGISAWA, Takayuki, c/o Mitsubishi Denki K. K., Tokyo 100-8310 (JP); HIRANO, Yoshihito, c/o Mitsubishi Denki K. K., Toky0 100-8310 (JP); YAMAMOTO, Syuhei, c/o Mitsubishi Denki K. K., Tokyo 100-8310 (JP)
(74) Representative: Pfenning, Meinig & Partner GbR
(86) International application number: PCT/JP2004/000317
(87) International publication number: WO 2005/069454

(56) References cited:
- DE-A1- 19 728 845
- JP-A- 11 284 257
- JP-A- 2000 077 750
- JP-A- 2002 141 585
- US-A- 5 553 088
- US-A1- 2001 033 587
- US-A1- 2002 039 377
- US-A1- 2002 097 769
- US-A1- 2003 161 376
- ZAPATA L E ET AL: "High power Yb:YAG/YAG composite thin disk laser" CONFERENCE ON LASERS AND ELECTRO-OPTICS. (CLEO 2001). TECHNICAL DIGEST. POSTCONFERENCE EDITION. BALTIMORE, MD, MAY 6-11, 2001, TRENDS IN OPTICS AND PHOTONICS. (TOPS), US, WASHINGTON, WA : OSA, US, vol. VOL. 56, 6 May 2001 (2001-05-06), pages 334-335, XP010559907 ISBN: 1-55752-662-1
- DASCALU T ET AL: "Thermo-optical effects in high-power diode edge-pumped microchip composite Yb:YAG laser" LASERS AND ELECTRO-OPTICS EUROPE, 2003. CLEO/EUROPE. 2003 CONFERENCE ON MUNICH, GERMANY 22-27 JUNE 2003, PISCATAWAY, NJ, USA,IEEE, 22 June 2003 (2003-06-22), pages 42-42, XP010710507 ISBN: 0-7803-7734-6
- YAMAMOTO S ET AL: "High power continuous-wave operation of side-pumped Yb:YAG thin disk laser" LASERS AND ELECTRO-OPTICS, 2004. (CLEO). CONFERENCE ON SAN FRANCISCO, CA, USA MAY 20-21, 2004, PISCATAWAY, NJ, USA,IEEE, vol. 1, 17 May 2004 (2004-05-17), pages 1409-1410, XP010745572 ISBN: 1-55752-777-6

## Description

### Field of the Invention

The present invention relates to a solid-state-laser pumping module using a thin disk type of solid state laser material, which is suitable for laser devices for laser radars and for machining, and a laser oscillator using the solid-state-laser pumping module.

### Background of the Invention

The shapes of laser materials for use in laser devices are categorized broadly into a rod type, a slab type, and a thin disk type. A rod type of laser material is a laser material which is formed like a rod so as to have a circular or polygonal shape in cross section.

Laser light whose power is to be amplified by such a rod type of laser material is made to pass through the laser material so that it is incident upon one end surface of the laser material and is passed through the laser material toward another end surface of the laser material along an optical axis perpendicular to the end surfaces of the laser material, and it is amplified by the laser material.

This structure has a feature of being easy to provide a large gain since the length over which the laser light propagates through the inside of the laser material is long. Since the laser material has a shape symmetric with respect to the optical axis, the structure also offers an advantage of being easy to obtain laser light having a symmetrical light intensity distribution.

Heat which is generated by the pumped laser material of rod type is removed via an outer surface of the laser material which serves as a heat cooling surface. For this reason, in a rod type of laser material, a temperature distribution occurs in a cross section perpendicular to the optical axis thereof. This temperature distribution becomes a factor which provides malfunctions which vary according to the pumping power of the laser material, such as a thermal lens effect, wave aberration, a thermal birefringence effect, to the laser material.

To be more specific, the thermal lens effect changes beam modes, such as the beam size and divergence of laser light within a laser oscillator including the laser material, because of the temperature gradient in the laser material. The wave aberration reduces the oscillation efficiency of the laser oscillator by causing the laser light which goes around the inside of the laser oscillator to suffer a loss, and also reduces the beam quality of the laser light. The thermal birefringence effect reduces the degree of polarization of the laser light especially in a case of providing a laser oscillation of linearly polarized light. For these reasons, losses in the laser oscillator increase and the oscillation efficiency decreases, and hence the beam quality of the laser light degrades.

A slab type of laser material is a laser material which is formed into a trapezoidal shape in cross section. Heat which is generated by the pumped laser material of slab type is removed from parallel opposing side surfaces which constitute the trapezoid of the slab type of laser material, and which serve as heat cooling surfaces. Laser light which is incident upon the slab type of laser material propagates through and is amplified by the slab type of laser material while being reflected by the above-mentioned heat cooling surfaces a number of times.

This structure has a feature of being easy to provide a large gain since the length over which the laser light propagates through the inside of the laser material is long. After reflected by the above-mentioned heat cooling surfaces a number of times, the incident laser light is outputted from the laser material. For this reason, since a thermal lens effect which occurs in the direction in which heat is removed s cancelled out, the change in the beam modes caused by the pumping state of the laser material is small.

Furthermore, since the direction in which heat is removed is only one direction, a temperature distribution occurs in only one direction of the laser material. Therefore, a thermal birefringence within the laser material has an axis in the direction in which heat is removed and an axis in a direction perpendicular to the heat removing direction. A slab type of laser material therefore provides an advantage of being able to reduce changes in the polarization state of laser light which are caused by the thermal birefringence by causing light linearly polarized in the direction of each axis of the thermal birefringence to propagate through the laser material.

However, in a slab type of laser material, since incident laser light is reflected by the heat cooling surfaces of the laser material a number of times, as mentioned above, the heat cooling surfaces need to have a high degree of flatness. Since the heat is actually removed from side surfaces other than the heat cooling surfaces, too, the temperature distribution of the laser material which occurs due to the heat generated by the pumping is not associated with only one direction, and therefore the thermal lens effect is not necessarily cancelled out perfectly.

Therefore, even in a slab type of laser material, changes in the beam modes can still occur due to changes in the pumping state of the laser material which are caused by a thermal lens effect. A further problem is that since the degree of polarization of the laser light degrades due to a thermal birefringence within the laser material, losses of the laser light increase and the oscillation efficiency of the laser device is therefore reduced.

A thin disc type of laser material is a laser material which is formed into a thin disk. In a thin disc type of laser material, laser light is made to be incident upon one of two surfaces having the largest area of side surfaces which constitute the above-mentioned disk, and is amplified while being made to propagate along a direction of the thickness of the disk after reflected by the other surface having the largest area which is opposite to the light incidence surface.

Heat which is generated by the pumped laser material of thin disc type is removed from the other surface which is opposite to the light incidence surface and which serves as a heat cooling surface. Since this structure provides a large heat cooling side surface, the heat removing is easily carried out as compared with the two other types of laser materials. In addition, since the direction in which the heat is removed is parallel to the optical axis of the laser light, a thermal lens effect and a thermal birefringence effect are hardly produced. Thus, a thin disk type of laser material has such a specific advantage which cannot be provided by any other type of laser material having another shape.

On the other hand, a thin disc type of laser material has the drawback of its gain decreasing with reduction in the thickness of the laser material since the length within the laser material over which incident laser light propagates is measured along the direction of the thickness of the disk. Furthermore, in order to acquire a larger gain with the same thickness and the same pumping power, a thin disk type of laser material needs to increase the density of pumping light by reducing the disk diameter thereof and by condensing the pumping light.

However, since the heat cooling surface via which the generated heat is removed is reduced as the disk diameter is reduced, the efficiency of the heat removing is reduced. Therefore, the density of heat generation increases when the pumping light is condensed to the laser material having such the reduced disk diameter.

As a result, if the temperature of the laser material rises too much when the laser material is pumped, the laser material itself may break thermally. Furthermore, in general, since a laser material decreases in its gain with rise in the temperature thereof, the efficiency of amplification also decreases.

In a thin disk type of laser material, when using an end surface pumping method of causing pumping light to be incident upon the thin disk laser material along the optical axis of laser light which is the direction of propagation of the laser light, the length propagated by the pumping light is limited by the thickness of the disk. A problem with such a thin disk type of laser material is therefore that the efficiency of absorption of the pumping light by the laser material cannot be increased sufficiently, and hence the oscillation efficiency of the laser device is reduced.

When a side pumping method of causing the pumping light to be incident upon the thin disk type of laser material via a side surface parallel to the optical axis of the laser light is used instead of the above-mentioned end surface pumping method, a relatively long absorption length can be provided since the pumping light propagates along a direction of the diameter of the disk. However, the following malfunctions occur even when using the side pumping method.

Generally, in order that a laser oscillator using a thin disc type of laser material can implement a high beam quality, the laser material needs to have a disk diameter which is suited to a fundamental-mode beam diameter so that no loss occurs in the laser oscillator. Furthermore, in order that the laser oscillator can implement a high beam quality with stability, it is desirable that the fundamental-mode beam diameter is so small that no loss occurs in the laser oscillator.

For this reason, the disk diameter of a thin disc type of laser material for use with a laser oscillator has to be reduced to as small as possible. However, the light incidence surface of the laser material via which pumping light is incident upon the laser material decreases inevitably with a reduction in the disk diameter, and it therefore becomes difficult to cause the pumping light to be incident upon the laser material using the side pumping method. Thereby, the influence of incidence loss of the pumping light becomes large, and this results in a reduction in the oscillation efficiency of the laser device on the contrary.

For example, when a high-power semiconductor laser (LD) in the form of an array is used, it is very difficult to cause pumping light outputted from a large light-emitting surface of the LD to be incident upon a disk side surface of a thin, small thin-disc-type laser material.

US 2002/0039377A1 and DE 19728845A1 disclose pump modules for pumping solid-state gain materials.

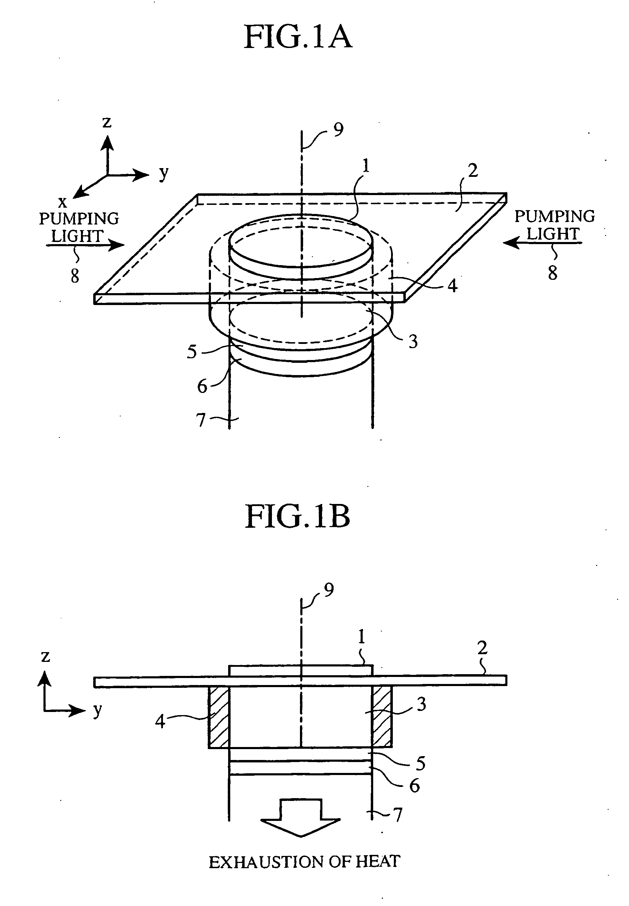

JP,2002-141585,A (referred to as patent reference 1 from here on) discloses a laser device in which heat is removed from all surrounding surfaces of a doped portion into which rare earth is doped, as a technique for solving the above-mentioned malfunctions that can occur in a thin disc type of laser material. This laser device is characterized in that heat is removed from all the surfaces of the doped portion, as shown in Fig. 1 of patent reference 1.

The doped portion is brought into contact with a heat sink at a lower end surface thereof, outer surfaces including an upper end surface, other than the lower end surface, are covered by a non-doped material, and this non-doped material is brought into contact with the above-mentioned heat sink.

The perimeter of the laser material including the doped portion and non-doped portion is covered by a pumping light dielectric multilayer for total-reflecting pumping light, and a light incidence portion for allowing the pumping light to pass therethrough is disposed in a part of a side surface of the laser material.

The pumping light emitted out of an LD is made to be incident upon the laser material via the light incidence portion after condensed by a condensing lens, and passes through the above-mentioned non-doped material and is incident directly upon the doped portion. A part of the pumping light which is not incident directly upon the doped portion enters the doped portion and is absorbed by the doped portion after being repeatedly reflected by the pumping light dielectric multilayer. Heat which is generated by the doped portion is directly removed from the heat sink, and is also removed, via the non-doped material, from the side and upper end surfaces of the doped portion.

Since the laser device is so constructed as mentioned above, the laser device can cause the pumping light emitted out of the LD to be absorbed by the non-doped material efficiently, and can efficiently remove the heat generated by the doped portion from all the surfaces of the doped portion.

However, the laser device disclosed by above-mentioned patent reference 1 does not solve all the above-mentioned malfunctions that can occur in a thin disc type of laser material.
In the above-mentioned laser device, the outer surface of the doped portion is covered by the non-doped material and heat generated by the doped portion is removed.

A problem with the above-mentioned laser device is that since the direction in which the heat is removed is perpendicular to the optical axis of the laser light when the heat is removed from the outer surface of the doped portion, a thermal lens effect, wave aberration and a thermal birefringence effect, which are the same as the malfunctions that can occur in a rod type of laser material, can occur.

In addition, in the above-mentioned laser device, the pumping light is condensed into the light incidence portion using a condensing lens. In this structure, when an array LD is used in order to increase the power of the pumping light and to provide higher power of laser light, the light incidence portion has to be also enlarged inevitably because the beam size of the condensed pumping light becomes large.

A part of the pumping light which is not incident directly upon the doped portion is reflected by the pumping light dielectric multilayer, and is confined within the laser material. Another problem is however that when the light incidence portion is enlarged, as mentioned above, the pumping light leaks toward outside the laser material from the light incidence portion before absorbed by the doped portion, and therefore the absorption efficiency decreases.

In order to increase the power of the pumping light, two or more LDs and condensing lenses can be disposed. However, also in this case, since two or more light incidence portions need to be provided, the pumping light can leak toward outside the laser material from the light incidence portions before absorbed by the doped portion, and therefore the absorption efficiency decreases.

The present invention is made in order to solve the above-mentioned problems, and it is therefore an object of the present invention to provide a solid-state-laser pumping module in which a direction in which heat generated by a thin disc type of laser material is removed is parallel to the optical axis of laser light in order to suppress occurrence of a thermal lens effect, wave aberration, and a thermal birefringence effect, and in which large power of pumping light can be incident upon the thin disc type of laser material, and a laser oscillator which uses the solid-state-laser pumping module.

### Disclosure of the Invention

A solid-state-laser pumping module in accordance with the present invention, as defined in claim 1, includes: a plate-shaped laser gain member for providing a gain generated by absorption of pumping light to laser light to amplify the laser light; a pumping light propagation member having a bonding surface portion optically bonded to a laser light incidence surface of the laser gain member, and for causing the pumping light to be incident upon the laser gain member via the bonding surface portion thereof; a reflecting surface member disposed on a surface of the laser gain member, which is opposite to the laser light incidence surface of the laser gain member, for reflecting the laser light which is incident upon the laser gain member via the light incidence surface, and which propagates through an inside of the laser gain member; and a cooling member for removing heat which is generated by the laser gain member and is transferred thereto via the reflecting surface member.

The solid-state-laser pumping module further comprises a pumping light reflecting surface member disposed on a lateral surface of the laser gain member, which is perpendicular to the laser light incidence surface of the laser gain member, for reflecting outgoing part of the pumping light which exists from said laser gain member, the pumping light being incident upon said laser gain member from the pumping light propagation member, towards the inside of said laser gain member.

According to this structure, the pumping light is introduced into the laser gain member via the bonding surface portion of the pumping light propagation member which is a slab waveguide, the bonding surface portion being optically bonded to the pumping laser gain member which is a thin disk type of solid state laser material. Therefore, the present invention offers an advantage of being able to make high power of pumping light be incident upon the solid-state-laser pumping module. Furthermore, a direction in which the heat generated by the laser gain member is removed at the time of pumping of the solid state laser material can be made to be nearly parallel to the optical axis of the laser light, and occurrence of a thermal lens effect, wave aberration, and a thermal birefringence effect can be suppressed. Therefore, the present invention offers another advantage of being able to provide high-quality laser light.

A laser oscillator in accordance with the present invention, as defined in claim 6, includes: a solid-state-laser pumping module including a plurality of plate-shaped laser gain members each for providing a gain generated by absorption of pumping light to laser light to amplify the laser light, a pumping light propagation member having bonding surface portions optically and respectively bonded to laser light incidence surfaces of the plurality of laser gain members, for causing the pumping light to be incident upon the plurality of laser gain members via the bonding surface portions thereof, reflecting surface members respectively disposed on surfaces of the plurality of laser gain members, which are opposite to the laser light incidence surfaces of the plurality of lager gain members, each for reflecting the laser light which is incident upon a corresponding one of the plurality of laser gain members via the light incidence surface, and which propagates through an inside of the corresponding one of the plurality of laser gain members, and a cooling member for removing heat which is generated by the plurality of laser gain members and is transferred thereto via the reflecting surface member; and an optical system for causing the laser light to be incident upon each of the plurality of laser gain members of the solid-state-laser pumping module and then causing the laser light reflected by each reflecting surface member to be re-incident upon each of the plurality of laser gain members, to output laser-oscillated laser light.

The solid-state laser puming module of the laser oscillator further comprises a pumping light reflecting surface member disposed on a lateral surface of each of the laser gain members, which is perpendicular to the laser light incidence surface of the laser gain members, for reflecting outgoing part of the pumping light which exists from said laser gain members, the pumping light being incident upon said laser gain members from the pumping light propagation member, towards the inside of said laser gain members.

According to this structure, high power of pumping light can be introduced into each of the plurality of laser gain members of the solid-state-laser pumping module via the bonding surface portions of the pumping light propagation member which is a slab waveguide, the bonding surface portions being optically bonded to the plurality of laser gain members each of which is a thin disk type of solid state laser material. Therefore, the present invention offers an advantage of being able to provide a laser device which can provide high power of laser light. Furthermore, a direction in which the heat generated by the plurality of laser gain members is removed at the time of pumping of the solid state laser materials can be made to be nearly parallel to the optical axis of the laser light, and occurrence of a thermal lens effect, wave aberration, and a thermal birefringence effect can be suppressed. Therefore, the present invention offers another advantage of being able to provide a laser device which can generate high-quality laser light.

### Brief Description of the Figures

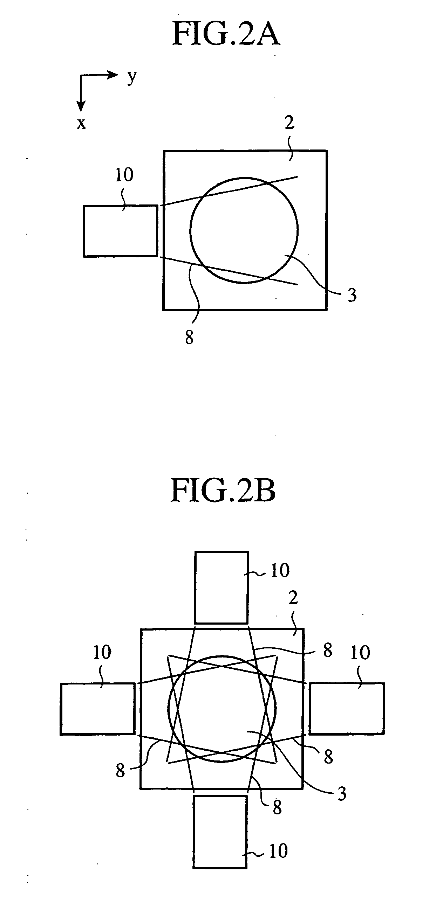

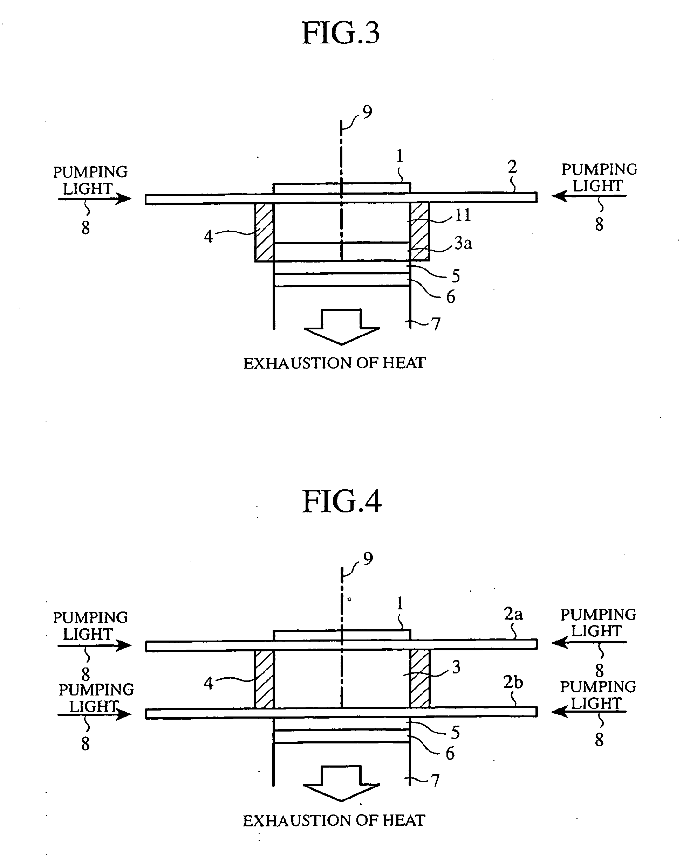

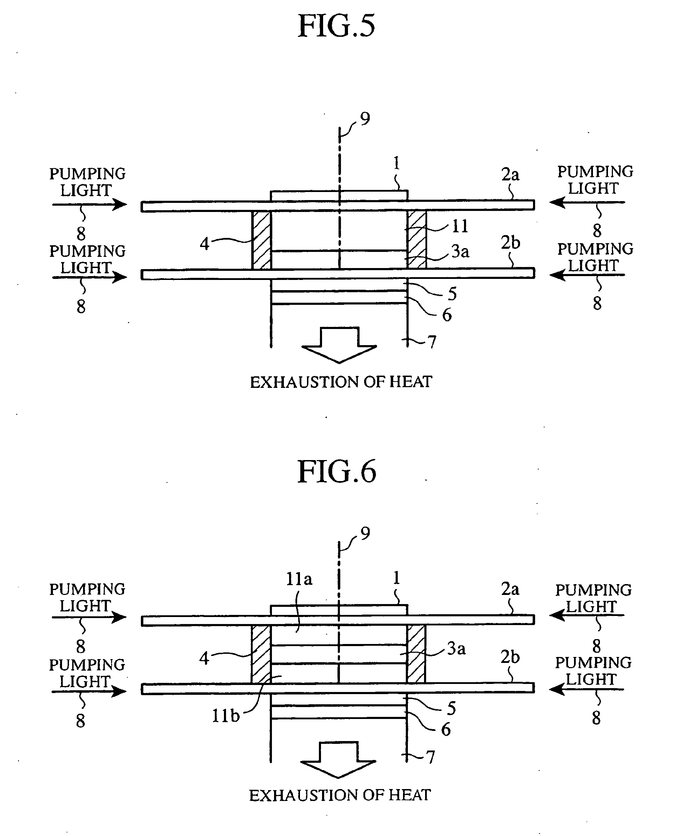

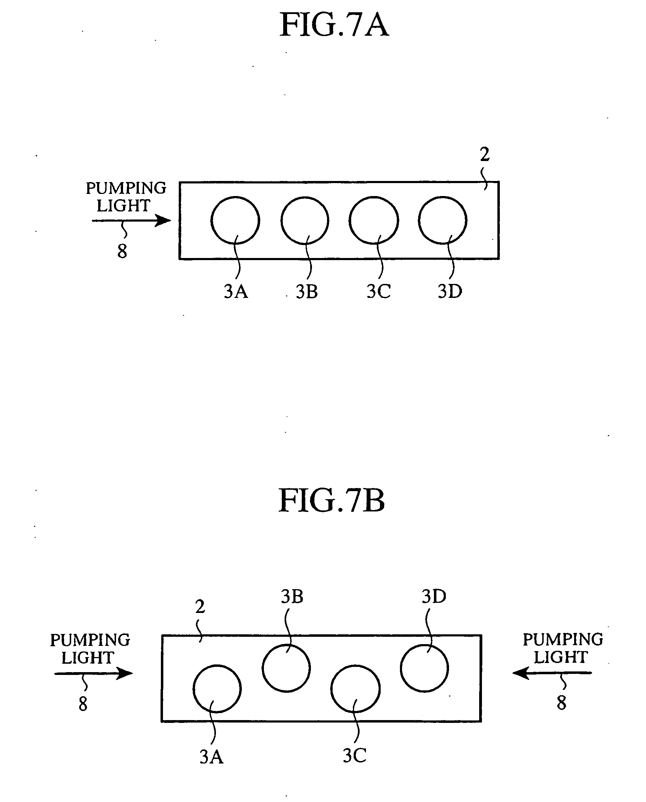

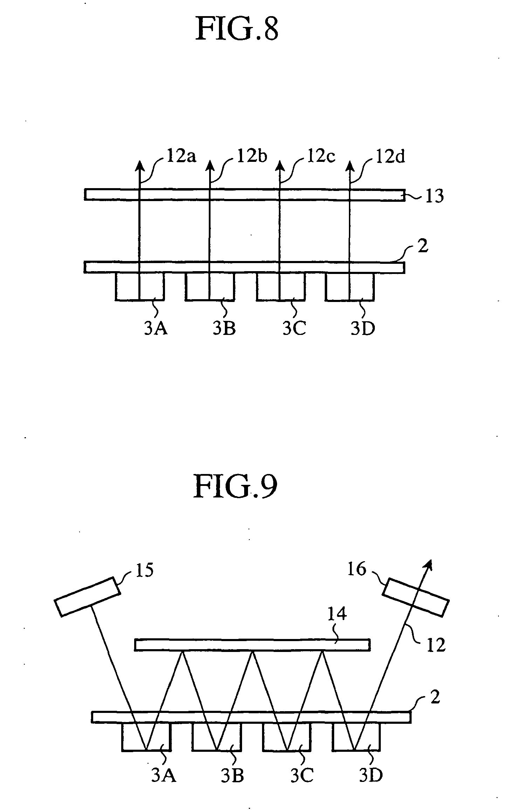

Fig. 1A is a diagram showing the structure of a solid-state-laser pumping module in accordance with embodiment 1 of the present invention; Fig. 1B is a side view of the solid-state-laser pumping module shown in Fig. 1A; Figs. 2A to 2H are diagrams showing the structures of various examples of a slab waveguide 2 shown in Fig. 1; Fig. 3 is a diagram showing the structure of a solid-state-laser pumping module in accordance with embodiment 2 of the present invention; Fig. 4 is a diagram showing the structure of a solid-state-laser pumping module in accordance with embodiment 3 of the present invention; Figs. 5 and 6 are diagrams showing the structures of variants of the solid-state-laser pumping module in accordance with embodiment 3; Fig. 7A is a diagram showing the structure of a solid-state-laser pumping module in accordance with embodiment 4 of the present invention; Fig. 7B is a diagram showing the structure of a variant of the solid-state-laser pumping module in accordance with embodiment 4; Fig. 8 is a diagram showing the structure of a laser oscillator which uses the solid-state-laser pumping module in accordance with embodiment 4; and Fig. 9 is a diagram showing the structure of a variant of the laser oscillator which uses the solid-state-laser pumping module in accordance with embodiment 4.

### Preferred Embodiments of the Invention

In order to explain the invention in greater detail, the preferred embodiments of the invention will be explained below with reference to the accompanying figures.

### Embodiment 1.

Fig. 1A is a diagram showing the structure of a solid-state-laser pumping module in accordance with embodiment 1 of the present invention, and Fig. 1B is a side view of the solid-state-laser pumping module shown in Fig. 1A. The solid-state-laser pumping module in accordance with this embodiment 1 is provided with an antireflection coating 1, a slab waveguide (i.e., a pumping light propagation member) 2, a solid state laser material (i.e., a pumping light storage member) 3, pumping light reflecting coating (i.e., a pumping light reflecting member) 4, a total reflection coating (i.e., a reflecting surface member 5, a bonding agent 6, and a heat sink (i.e., a cooling member) 7.

The total reflection coating 5 is bonded to the heat sink 7 via the bonding agent 6. The thin disk-shaped solid state laser material 3 is formed on this total reflection coating 5. The slab waveguide 2 is disposed on an end surface of the solid state laser material 3 which is opposite of a surface of the solid state laser material 3 which is bonded to the total reflection coating 5.

The antireflection coating 1 is formed on a surface of the slab waveguide 2 which is opposite to the above-mentioned end surface of the solid state laser material 3. The pumping light reflecting coating 4 is formed on a lateral surface of the solid state laser material 3.

Pumping light 8 is made to be incident upon each side surface of the slab waveguide 2 which is parallel to the optical axis 9 of laser light whose power is to be amplified by the pumping module. Almost all of the laser light incident upon the solid state laser material 3 via the slab waveguide 2 penetrates the antireflection coating 1. The antireflection coating 1 can be formed of, for example, a plurality of dielectric thin films which are laminated.

The slab waveguide 2 has a smaller thickness than that in a direction of the z-axis of the solid state laser material 3. The slab waveguide 2 is optically bonded to the solid state laser material 3 with either an optical contact or diffusion bonding.

The slab waveguide 2 is formed of a host material of the solid state laser material 3, a crystal having much the same refractive index as the solid state laser material 3, or a glass material.

A typical solid state laser material can be used as the solid state laser material 3. For example, Nd:YAG, Nd:YLF, Nd:Glass, Yb:YAG, Yb:YLF, Er:Glass, Er:YAG, Tm:YAG, Tm:YLF, Ho:YAG, Ho:YLF, Tm, Ho:YAG, Tm, Ho:YLF, Ti:Sapphire, Cr:LiSAF, or the like is used as the solid state laser material 3.

The cross section of the solid state laser material 3 perpendicular to the optical axis 9 of the incident laser light can be formed to have an arbitrary shape, such as a circular shape, an elliptical shape, or a polygonal shape. Especially, it is desirable that the cross section of the solid state laser material 3 has such a shape as a circular shape or a regular polygonal shape which is symmetric with respect to the optical axis 9 of the laser light.

The pumping light reflecting coating 4 reflects the pumping light 8 so as to confine it within the solid state laser material 3. This pumping light reflecting coating 4 can be formed by laminating a plurality of dielectric thin films, or using vapor deposition of a metal film. In Fig. 1B, only the pumping light reflecting coating 4 is shown in cross section in an xz plane so that an internal structure covered by the pumping light reflecting coating 4 can be recognized visually.

The total reflection coating 5 total-reflects the laser light which is incident upon the slab waveguide 2 via the antireflection coating 1 and then passes through the slab waveguide 2 and solid state laser material 3. This total reflection coating 5 can be formed by laminating a plurality of dielectric thin films, or using vapor deposition of a metal film.

The bonding agent 6 removes heat which is generated by the solid state laser material 3 and is transferred thereto via the total reflection coating 5 toward the heat sink 7. This bonding agent 6 can be formed of metallic solder, an optical adhesive, a thermally conductive adhesive, or the like.

Next, the operation of the solid-state-laser pumping module in accordance with this embodiment of the present invention will be explained.

Pumping light 8 which is incident upon each side surface of the slab waveguide 2 propagates through the slab waveguide 2 while being total-reflected by inner surfaces of the slab waveguide 2. Since the solid state laser material 3 and slab waveguide 2 are optically bonded to each other, the pumping light 8 which reaches a portion of the slab waveguide 2 which is located above the solid state laser material 3 enters and is absorbed by the solid state laser material 3 and causes it to generate a gain.

In addition, although a part of the pumping light 8 remains in the laser material 3 without being absorbed by the laser material 3, a small amount of the remaining pumping light leaks toward outside the laser material via the slab waveguide 2, since the thickness of the slab waveguide 2 is thin as compared with that of the solid state laser material 3. In this case, most of the remaining pumping light 8 which has remained within the laser material is reflected by the pumping light reflecting coating 4 and is confined within the solid state laser material 3, and is absorbed by the solid state laser material 3 again. As a result, a high degree of efficiency of absorption of the pumping light 8 can be implemented.

Laser light which is incident upon the antireflection coating 1 in parallel with the optical axis 9 passes through the antireflection coating 1 and slab waveguide 2, and enters the solid state laser material 3. The laser light is then amplified by the solid state laser material 3. The amplified laser light is further amplified by the solid state laser material 3 after being reflected by the total reflection coating 5. The laser light then passes through the slab waveguide 2, and, after that, emerges, via the antireflection coating 1, toward outside the pumping module in parallel with the optical axis 9.

Heat which is generated when the solid state laser material 3 is pumped by the pumping light is transferred, via the total reflection coating 5 and bonding agent 6, to the heat sink 7. The heat sink 7 is cooled by, for example, cooling water, an air cooling fan, or the like so that rises in the temperature of the solid state laser material 3 can be suppressed.

Since the outer surface of the pumping light reflecting coating 4 is nearly insulated by the atmosphere or a heat insulator, the heat which is generated by the solid state laser material 3 is removed only in the direction of the -z-axis, which is shown by an arrow of Fig. 1B. Since the optical axis 9 of the laser light is thus made be in parallel with the direction in which the heat is removed, a thermal lens effect and a thermal birefringence effect hardly occur. For this reason, the pumping module has a little change in the mode of the laser light amplified thereby, which is conventionally susceptible to a heat lens effect, and a small loss in laser oscillation or amplification, which is conventionally susceptible to a thermal birefringence effect.

By providing and arranging a partial reflection mirror for reflecting a part of the laser light and for allowing a remaining part of the laser light to pass therethrough on the optical axis 9, which is not shown in the figures, a laser oscillator in which the laser light is laser-oscillated within a path which consists of the above-mentioned partial reflection mirror and the solid-state-laser pumping module in accordance with the present invention can be constructed. As a result, the above-mentioned laser oscillator can be used as a laser device which outputs the laser light amplified thereby to outside the oscillator from the above-mentioned partial reflection mirror.

In the above-mentioned explanation, the pumping light reflecting coating 4 for confining the pumping light 8 within the solid state laser material 3 is formed of a dielectric film or a metal film, as an example. As an alternative, the pumping light reflecting coating 4 can be formed of a ceramic material for diffusively reflecting the pumping light 8 with a high degree of reflectivity. As the ceramic material, Macelite (registered trademark), Spectralon (registered trademark), or the like is used.

The pumping light 8 which is incident upon the reflecting coating which is formed of such a ceramic material is diffusively reflected by the reflecting coating and is then confined and absorbed by the solid state laser material 3. Therefore, this variant makes it possible to pump the laser light which passes through the inside of the solid state laser material 3 more uniformly as compared with the case where the pumping light reflecting coating 4 is formed of a dielectric film or a metal film.

When a ceramic material is used as the pumping light reflecting coating 4, the pumping light 8 does not satisfy the total reflection condition at the upper and lower surfaces of the laser material 3 and an amount of pumping light which leaks toward outside the laser material increases. For this reason, it is desirable to provide each of the antireflection coating 1 and total reflection coating 5 with a function of reflecting the pumping light 8.

Figs. 2A to 2H are diagrams showing the structures of various examples of the slab waveguide 2 shown in Fig. 1. Fig. 2A is an xy plan view showing an example in which a semiconductor laser 10 for pumping (referred to an LD for pumping from here on) which outputs the pumping light 8 shown in Fig. 1 and causes it to be incident upon the slab waveguide 2.

This structure is effective for a case where the pumping light 8 has a small divergence and the beam width of the pumping light 8 within the solid state laser material 3 is small compared with the size of the solid state laser material 3 which is measured along the width of the laser material. In this case, almost all of the pumping light 8 emitted out of the pumping LD 10 can be made to be incident upon the solid state laser material 3.

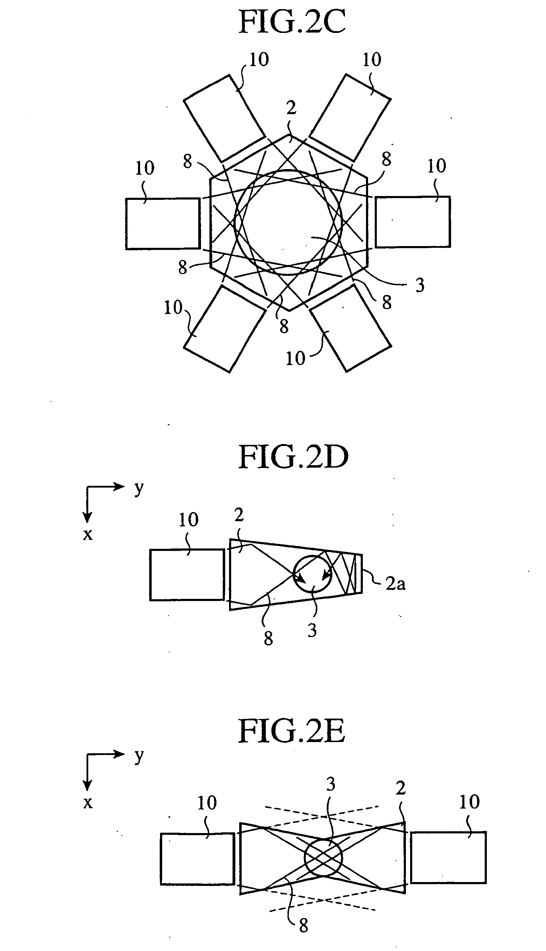

Fig. 2B shows another example in which four LDs 10 for pumping are arranged so as to be opposite to all four side surfaces of the slab waveguide 2 having a rectangular cross section in an xy plane, respectively, and Fig. 2C shows another example in which six LDs 10 for pumping are arranged so as to be opposite to all six side surfaces of the slab waveguide 2 having a hexagonal cross section in an xy plane, respectively.

In the structure shown in Fig. 2A, only one LD 10 for pumping is arranged with respect to the single slab waveguide 2. Instead, two or more LDs 10 for pumping can be arranged with respect to the single slab waveguide 2, as shown in Figs. 2B and 2C.

In these variants, higher power of pumping light 8 can be made to be incident upon the solid state laser material 3, and the solid state laser material 3 can provide a higher gain and higher power of laser light.

Fig. 2D is an xy plan view showing another example in which the slab waveguide 2 has tapered upper and lower surfaces, and the pumping light 8 is made to be incident upon the solid state laser material 3 via the slab waveguide 2. This structure shown in Fig. 2D is effective for a case where the pumping light 8 has a large divergence or a light emitting portion of the LD 10 for pumping has a large width, and the beam width of the pumping light 8 within the solid state laser material 3 is large compared with the size of the solid state laser material 3 which is measured along the width of the laser material.

The slab waveguide 2 having tapered upper and lower surfaces causes the pumping light 8 emitted out of the LD 10 for pumping to be incident upon the solid state laser material 3 while condensing the pumping light 8 in the direction of the x-axis. As a result, the efficiency of causing the pumping light 8 to be incident upon the solid state laser material 3 is improved.

This structure makes it possible for both a part of the pumping light 8 which passes through the slab waveguide without entering the solid state laser material 3, and a pumping light component which leaks toward the slab waveguide 2 after entering the solid state laser material 3 to get reflected by the tapered lower and upper surfaces of the slab waveguide 2 repeatedly so that they are incident upon the laser material 3 again.

In addition, by forming a total reflection coating for total-reflecting the pumping light 8 on a side surface 2a which is opposite to the pumping light incidence surface of the slab waveguide 2, a higher degree of efficiency of incidence of the pumping light upon the laser material can be implemented.

In the example shown in Fig. 2D, only one LD 10 for pumping is arranged. As an alternative, two or more LDs 10 for pumping can be arranged. For example, in a variant of Fig. 2E, the slab waveguide 2 has two tapered portions which are oppositely tapered from ends thereof toward the center of the slab waveguide 2, and laser light is pumped by two beams of pumping light emitted out of two LDs 10 for pumping.

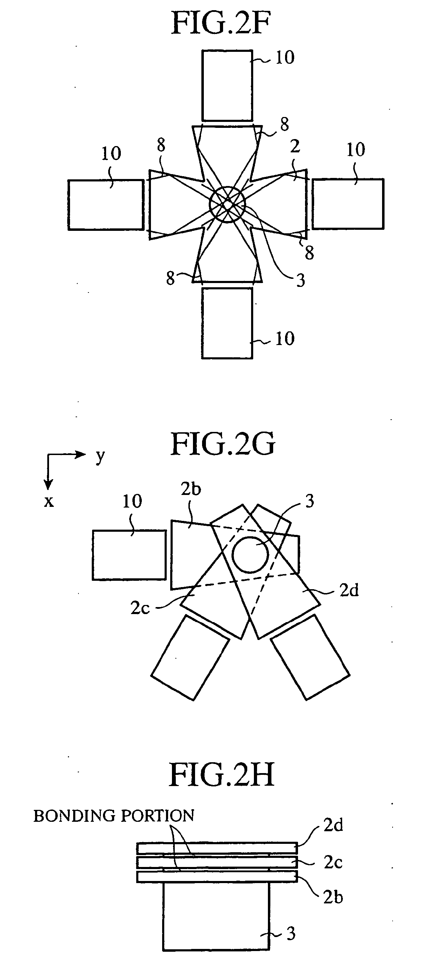

In another variant of Fig. 2F, the slab waveguide 2 has four tapered portions which are arranged in the shape of a cross in an xy plane, and laser light is pumped by four beams of pumping light emitted out of four LDs 10 for pumping.

In these variants, higher power of pumping light 8 can be made to be incident upon the solid state laser material 3, and the solid state laser material 3 can provide a higher gain and higher power of laser light.

Since the slab waveguide 2 shown in Fig. 2E or 2F has a complicated shape, it is difficult to manufacture the slab waveguide 2 and therefore the cost of manufacturing the solid-state-laser pumping module increases. To solve this problem, two or more LDs 10 for pumping and two or more slab waveguides 2b to 2d can be arranged with respect to the single solid state laser material 3, as shown in Fig. 2G.

As shown in Fig. 2H which is a side view of this structure, the two or more slab waveguides 2b to 2d are optically bonded to each other via boding portions thereof which are located above the solid state laser material 3. As a result, pumping light 8 which is incident upon the slab waveguide 2c enters the solid state laser material 3 via the slab waveguide 2b, and pumping light 8 which is incident upon the slab waveguide 2d enters the solid state laser material 3 via the slab waveguides 2c and 2b.

The pumping module which is constructed in this way can cause the plural beams of pumping light 8 emitted out of the two or more LDs 10 for pumping to be incident upon the solid state laser material 3 using the relatively-and-simply-shaped slab waveguides 2. Therefore, the solid state laser material 3 can provide a higher gain and higher power of laser light at a low cost.

### Embodiment 2.

In the solid-state-laser pumping module in accordance with above-mentioned embodiment 1, the thickness of the slab waveguide 2 must be thinner than that of the solid state laser material 3 in the direction of the z-axis. On the other hand, when the amount of absorption of the pumping light 8 by the solid state laser material 3 is constant, it is desirable to reduce the thickness of the solid state laser material 3 in order to reduce the temperature rise of the solid state laser material 3.

However, a reduction in the thickness of the solid state laser material 3 increases the amount of pumping light 8 which is confined within the laser material 3, but leaks toward outside the pumping module via the slab waveguide 2, and decreases the efficiency of the laser device. A further problem is that a reduction in the thickness of the solid state laser material 3 makes the solid state laser material 3 itself more prone to breakages.

This embodiment 2 discloses a structure in which the above-mentioned defects are removed and a thinner solid state laser material is provided.

Fig. 3 is a diagram showing the structure of the solid-state-laser pumping module in accordance with embodiment 2 of the present invention, and is a side view of the solid-state-laser pumping module. In Fig. 3, only a pumping light reflecting coating 4 is shown in cross section in an xz plane so that an internal structure covered by the pumping light reflecting coating 4 can be recognized visually, as in the case of Fig. 1B.

In the solid-state-laser pumping module in accordance with this embodiment 2, a solid-state-laser holding material 11 is placed between the solid state laser material 3a, which is disposed on a total reflection coating 5, and a slab waveguide 2.

The slab waveguide 2 has a small thickness compared with the sum of that of the solid-state-laser holding material 11 and that of the solid state laser material 3a in the direction of the z-axis. The slab waveguide 2 and solid-state-laser holding material 11 are optically bonded to each other with an optical contact or diffusion bonding, and the solid-state-laser holding material 11 and solid state laser material 3a are optically bonded to each other with an optical contact or diffusion bonding.

Like the slab waveguide 2, the solid-state-laser holding material 11 causes the pumping light 8 to propagate therethrough and to be incident upon the solid state laser material 3a. The solid-state-laser holding material 11 is formed of a host material of the solid state laser material 3a, a crystal having much the same refractive index as the solid state laser material 3a, or a glass material. The same components as those of Fig. 1 are designated by the same numerals, and the explanation of the components will be omitted hereafter.

Next, the operation of the solid-state-laser pumping module in accordance with this embodiment of the present invention will be explained.

Pumping light 8 which is incident upon each side surface of the slab waveguide 2 propagates through the slab waveguide 2 while being total-reflected by inner surfaces of the slab waveguide 2. Since the solid-state-laser holding material 11 and slab waveguide 2 are optically bonded to each other, and the solid-state-laser holding material 11 and solid state laser material 3a are optically bonded to each other, the pumping light 8 which reaches a portion of the slab waveguide 2 which is located above the solid-state-laser holding material 11 enters, via the solid-state-laser holding material 11, the solid state laser material 3a and is absorbed by the solid state laser material 3a, and causes it to generate a gain.

While a part of the pumping light 8 remains in the solid state laser material 3a without being absorbed by the solid state laser material 3a, a small amount of the remaining pumping light leaks toward outside the solid state laser material via the slab waveguide 2, since the thickness of the slab waveguide 2 is thin as compared with the sum of that of the solid state laser material 3a and that of the solid-state-laser holding material 11.

In this case, most of the remaining pumping light 8 which has remained within the solid state laser material is reflected by the pumping light reflecting coating 4 and is confined within the solid state laser material 3a or solid-state-laser holding material 11, and is incident upon and absorbed by the solid state laser material 3a again. As a result, a high degree of efficiency of absorption of the pumping light 8 can be implemented.

Laser light which is incident upon the antireflection coating 1 in parallel with the optical axis 9 passes through the antireflection coating 1, slab waveguide 2, and solid-state-laser holding material 11, and enters the solid state laser material 3a. The laser light is then amplified by the solid state laser material 3a. The amplified laser light is further amplified by the solid state laser material 3a after being reflected by the total reflection coating 5. The laser light then passes through the solid-state-laser holding material 11 and slab waveguide 2, and, after that, emerges, via the antireflection coating 1, toward outside the pumping module in parallel with the optical axis 9.

Heat which is generated by the solid state laser material 3a when it is pumped by the pumping light is transferred, via the total reflection coating 5 and bonding agent 6, to the heat sink 7. The heat sink 7 is cooled by, for example, cooling water, an air cooling fan, or the like so that rises in the temperature of the solid state laser material 3a can be suppressed.

Since the pumping module which is so constructed as above can reduce the temperature rise of the solid state laser material 3a with the thickness of the solid state laser material 3a being reduced, the reduction in the gain due to thermal breakages and the temperature rise of the solid state laser material 3a can be suppressed. Since the solid-state-laser holding material 11 bonded to the solid state laser material 3a also serves as a reinforcing member, the solid-state-laser pumping module can be made to be less prone to breakages even if the thickness of the solid state laser material 3a is reduced, and therefore the reliability of the solid-state-laser pumping module can be improved.

### Embodiment 3.

In above-mentioned embodiment 1, the solid-state-laser pumping module provided with the single slab waveguide 2 which is bonded directly to the solid state laser material 3 is shown as an example. In contrast, a solid-state-laser pumping module in accordance with this embodiment 3 is provided with two slab waveguides 2 which are bonded to the upper and lower side surfaces of a solid state laser material 3, so that higher power of pumping light 8 can be made to be incident upon the solid state laser material 3 and the solid state laser material 3 can provide a high gain.

Fig. 4 is a diagram showing the structure of the solid-state-laser pumping module in accordance with embodiment 3 of the present invention, and is a side view of the solid-state-laser pumping module. In Fig. 4, only a pumping light reflecting coating 4 is shown in cross section in an xz plane so that an internal structure covered by the pumping light reflecting coating 4 can be recognized visually, as in the case of Fig. 1B.

Each of the first and second slab waveguides 2a and 2b is formed of a host material of the solid state laser material 3, a crystal having much the same refractive index as the solid state laser material 3, or a glass material. Each of the first and second slab waveguides 2a and 2b has a small thickness compared with that of the solid state laser material 3 in the direction of the z-axis.

The first slab waveguide 2a and solid state laser material 3 are optically bonded to each other with an optical contact or diffusion bonding, and the solid state laser material 3 and second slab waveguide 2b are optically bonded to each other with an optical contact or diffusion bonding.

The second slab waveguide 2b is fixed onto the heat sink 7 via a total reflection coating 5 and a bonding agent 6. The same components as those of Fig. 1 are designated by the same numerals, and the explanation of the components will be omitted hereafter.

Next, the operation of the solid-state-laser pumping module in accordance with this embodiment of the present invention will be explained.

Pumping light 8 which is incident upon the first slab waveguide 2a propagates through the first slab waveguide 2a and is incident upon the solid state laser material 3 while being total-reflected by the inner surfaces of the first slab waveguide 2a. Furthermore, pumping light 8 which is incident upon the second slab waveguide 2b propagates through the second slab waveguide 2b and is incident upon the solid state laser material 3 while being total-reflected by the inner surfaces of the second slab waveguide 2b. The plural beams of pumping light 8 which are incident upon the solid state laser material 3 are absorbed by the solid state laser material 3, and cause the solid state laser material 3 to generate a gain.

Part of the plural beams of pumping light 8 remains in the laser material 3 without being absorbed by the laser material 3 and a small amount of the remaining pumping light leaks toward outside the laser material via the first and second slab waveguides 2a and 2b, since the thickness of each of the first and second slab waveguides 2a and 2b is small as compared with that of the solid state laser material 3. In this case, most of the remaining pumping light 8 which has remained within the laser material is reflected by the pumping light reflecting coating 4 and is confined within the solid state laser material 3, and is absorbed by the solid state laser material 3 again.

Therefore, since still higher power of pumping light 8 can be made to be incident upon the solid state laser material 3 and a high absorption efficiency can be implemented, the solid-state-laser pumping module can provide a higher gain.

In the above-mentioned structure shown in Fig. 4, the first and second slab waveguides 2a and 2b are bonded to the solid state laser material 3 via no specific member.

As an alternative, a solid state laser material 3a having a smaller thickness can be bonded to the first slab waveguide 2a via a solid-state-laser holding material 11, as shown in Fig. 5. When the solid-state-laser pumping module is constructed in this way, the temperature rise of the solid state laser material 3a can be reduced upon the same principle as explained in above-mentioned embodiment 3.

As a result, while still higher power of pumping light 8 is made to be incident upon the solid state laser material 3a so that a high absorption efficiency can be implemented, the reduction in the gain due to thermal breakages and the temperature rise of the solid state laser material 3a can be suppressed.

In another variant, as shown in Fig. 6, a solid state laser material 3a having a small thickness can be bonded to the first slab waveguide 2a via a first solid-state-laser holding material 11a, and can be bonded to the second slab waveguide 2b via a second solid-state-laser holding material 11b.

Each of the solid-state-laser holding materials 11a and 11b functions in the same way that the solid-state-laser holding material 11 does, and is formed of a host material of the solid state laser material 3a, a crystal having much the same refractive index as the solid state laser material 3a, or a glass material. The solid-state-laser holding materials 11a and 11b are optically bonded to the first and second slab waveguides and solid state laser material, respectively, through the same processing as previously mentioned in embodiment 2.

When the solid-state-laser pumping module is constructed in this way, since the solid state laser material 3a is pumped by both incident pumping light traveling in a downward direction and incident pumping light traveling in an upward direction, a uniform pumping distribution can be provided.

In Figs. 5 and 6, only a pumping light reflecting coating 4 is shown in cross section in an xz plane so that an internal structure covered by the pumping light reflecting coating 4 can be recognized visually, as in the case of Fig. 1B. In Figs. 5 and 6, the same components as those of Figs. 1 and 3 are designated by the same numerals.

### Embodiment 4.

In above-mentioned embodiment 1, the structure for suppressing the amount of pumping light which leaks toward outside the solid state laser material via the slab waveguide 2 is shown. In this structure, if the slab waveguide 2 does not have a sufficiently small thickness compared with that of the solid state laser material 3 in the direction of the z-axis, the amount of pumping light which leaks toward outside the solid state laser material increases and therefore the efficiency of absorption of the pumping light by the solid state laser material decreases.

This embodiment 4 discloses a structure for absorbing remaining pumping light by using a plurality of solid state laser materials to remove the above-mentioned defect.

Fig. 7A is a diagram showing the structure of a solid-state-laser pumping module in accordance with embodiment 4 of the present invention, and shows an xy plan view of the solid-state-laser pumping module in which the plurality of solid state laser materials 3A to 3D are bonded to a slab waveguide 2. Each of the plurality of solid state laser materials 3A to 3D has the same structure and functions as the solid state laser material 3 shown in Fig. 1.

In the figure, an antireflection coating 1 and structural components disposed under each of the plurality of solid state laser materials 3A to 3D are not shown for each of the plurality of solid state laser materials 3A to 3D so that a relationship between the slab waveguide 2 and the plurality of solid state laser materials 3A to 3D can be easily recognized.

Next, the operation of the solid-state-laser pumping module in accordance with this embodiment of the present invention will be explained.

Pumping light 8 which is incident upon the slab waveguide 2 propagates through the slab waveguide 2 while being total-reflected by the inner surfaces of the slab waveguide 2. Since the solid state laser material 3A and slab waveguide 2 are optically bonded to each other, the pumping light 8 which reaches an upper portion of the slab waveguide 2 which is located above the solid state laser material 3A enters and is absorbed by the solid state laser material 3A and causes it to generate a gain.

Both remaining part of the pumping light 8 incident upon the solid state laser material 3A, which leaks toward outside the solid state laser material 3A via the slab waveguide 2, and part of pumping light 8 which has not passed through the upper portion of the solid state laser material 3A and has not entered the solid state laser material 3A further propagate through the slab waveguide 2 while being total-reflected by the inner surfaces of the slab waveguide 2, and partially enter the solid state laser material 3B, is absorbed by the solid state laser material 3B, and causes it to generate a gain.

Furthermore, remaining pumping light which has not been absorbed by even the solid state laser material 3B propagates through the slab waveguide 2, and partially enters the solid state laser materials 3C and 3D, is absorbed by the solid state laser materials 3C and 3D, and causes them to generate a gain.

Thus, the plurality of solid state laser materials 3A to 3D which are so arranged as mentioned above can decrease the amount of remaining pumping light which is not absorbed after all and therefore can absorb the pumping light efficiently. Thereby, the efficiency of the solid-state-laser pumping module can be improved.

The example of Fig. 7A shows the structure in which the pumping light 8 is made to be incident upon only one side surface of the pumping module. As an alternative, two or more beams of pumping light can be made to be incident upon two or more side surfaces of the slab waveguide 2. When the solid-state-laser pumping module is constructed in this way, the solid-state-laser pumping module can provide high storage power.

The plurality of solid state laser materials 3A to 3D can be arranged as shown in Fig. 7B. The solid state laser materials 3A to 3D shown in Fig. 7B are zigzag-arranged so that any two adjacent solid state laser materials do not overlap each other when viewed from the direction in which the pumping light 8 propagates through the slab waveguide.

When the plurality of solid state laser materials 3A to 3D are thus arranged, the pumping light 8 incident upon the solid-state-laser pumping module has a component which is incident directly upon each of the plurality of solid state laser materials 3A to 3D.

As a result, compared with the structure, as shown in Fig. 7A, in which the remaining pumping light which is not absorbed by the solid state laser material 3A can be absorbed by the other solid state laser materials 3B to 3D, the plurality of solid state laser materials 3A to 3D can have more uniform storage power.

Although Figs. 7A and 7B each shows the example in which the four solid state laser materials 3A to 3D are included in the solid-state-laser pumping module, it is clear that any variant in which two or more solid state laser materials are included in the solid-state-laser pumping module can be provided, and offers the same advantage.

In Figs. 7A and 7B, the upper and lower side surface of the slab waveguide 2 can be tapered so that the width of the slab waveguide 2 in a direction perpendicular to the direction in which the pumping light 8 propagates through the slab waveguide becomes the narrowest in the vicinity of the center of the slab waveguide.

When the solid-state-laser pumping module is constructed in this way, since the pumping light 8 is condensed to near the center of the slab waveguide where the intensity of the pumping light 8 is reduced, the solid state laser materials 3B and 3C placed in the vicinity of the center of the slab waveguide can have a higher efficiency of absorption of the pumping light, and therefore the plurality of solid state laser materials 3A to 3D can have more uniform storage power.

Fig. 8 is a diagram showing an example of the structure of a laser oscillator which uses the solid-state-laser pumping module shown in Fig. 7A or 7B, and is a side diagram of the solid-state-laser pumping module. Laser oscillation is carried out in such a manner that plural beams of laser light 12a to 12d are incident upon the plurality of solid state laser materials 3A to 3D, respectively, and these beams of laser light 12a to 12d go back and forth between a partial reflection mirror 13 and the solid-state-laser pumping modules, respectively.

In the figure, an antireflection coating 1 and structural components disposed under each of the plurality of solid state laser materials 3A to 3D are not shown for each of the plurality of solid state laser materials 3A to 3D so that a relationship between the slab waveguide 2 and the plurality of solid state laser materials 3A to 3D can be easily recognized.

Next, the operation of the solid-state-laser pumping module in accordance with this embodiment of the present invention will be explained.

When the plurality of solid state laser materials 3A to 3D are pumped by the pumping light inputted thereto via the slab waveguide 2, and generate a gain, as mentioned above, plural beams of laser light 12a to 12d are generated and made to be incident upon the plurality of solid state laser materials 3A to 3D, respectively.

When passing through the insides of the plurality of solid state laser materials 3A to 3D after being incident upon them, respectively, the plural beams of laser light 12a to 12d increase in power and are reflected by a not-shown total reflection coating 5 toward the partial reflection mirror 13. At this time, the plural beams of laser light increase in power because beams of light reflected by the total reflection coating 5 also pass through the insides of the plurality of solid state laser materials 3A to 3D, respectively.

The plural beams of laser light 12a to 12d which have reached the partial reflection mirror 13 are reflected by the partial reflection mirror 13 towards the plurality of solid state laser materials 3A to 3D, respectively. Thereby, the plural beams of laser light 12a to 12d increase in power the same way as mentioned above when passing through the plurality of solid state laser materials 3A to 3D again, respectively.

As a result, laser oscillation occurs between the partial reflection mirror 13 and each of the plurality of total reflection coatings 5 which are formed on the lower surfaces of the plurality of solid state laser materials 3A to 3D, respectively. The plural beams of laser light 12a to 12d can be made to emerge toward outside the solid-state-laser pumping module via the partial reflection mirror 13. That is, the solid-state-laser pumping module runs as a laser oscillator which outputs the plural beams of laser light 12a to 12d. When the solid-state-laser pumping module is constructed in this way, it can obtain a high-power laser output since it can output the power stored in the plurality of solid state laser materials 3A to 3D to outside the solid-state-laser pumping module as the plural beams of laser light 12a to 12d.

In accordance with this embodiment, there is no necessity to provide a plurality of light sources for generating the pumping light 8, such as semiconductor lasers, the number of light sources being equal to the number of solid state laser materials 3A to 3D, and the solid-state-laser pumping module can pump the plurality of solid state laser materials 3A to 3D using a small number of light sources.

For this reason, the solid-state-laser pumping module can decrease in size as compared with the structure in which two or more solid-state-laser pumping modules each having one solid state laser material 3 as shown in Fig. 1 are arranged.

In the example of Fig. 8, the solid-state-laser pumping module has the single partial reflection mirror 13. As an alternative, the solid-state-laser pumping module can have a plurality of partial reflection mirrors 13 which are arranged with respect to the plural beams of laser light 12a to 12d, respectively.

A plurality of concave partial reflection mirrors 13 can be alternatively arranged with respect to the plural beams of laser light 12a to 12d, respectively, in order to adjust the beam modes of the plural beams of laser light generated by the laser oscillator. When the solid-state-laser pumping module is constructed in this way, the laser oscillator can provide desired beam modes of laser light.

Instead of the partial reflection mirror 13, lenses can be arranged on the optical paths of the plural beams of laser light 12a to 12d, respectively, so that the plural beams of laser light 12a to 12d can be guided, via the plurality of lenses, to the plurality of solid state laser materials 3A to 3D using plane mirrors, respectively.

When the solid-state-laser pumping module is constructed in this way, the modes of the plural beams of laser light 12a to 12d are adjusted using the plurality of lenses, respectively, so that the plural beams of laser light 12a to 12d can have beam diameters which satisfy stability conditions of the laser oscillator. As a result, the laser oscillator can operate with stability. Since the partial reflection mirror 13 can be constructed of a single plane mirror, the laser oscillator can be manufactured at a low cost.

A lens array having lenses formed in a substrate and arranged in the shape of an array can be used as the plurality of lenses which are arranged on the optical paths of the plural beams of laser light 12a to 12d. When the solid-state-laser pumping module is constructed in this way, there is no necessity to fix each of the plurality of lenses individually in the pumping module, and therefore the structure of the laser device can be simplified. Furthermore, the laser oscillator can operate with stability.

The phases of the plural beams of laser light 12a to 12d can be synchronized with one another in the laser oscillator. For example, laser light which oscillates at a single frequency is prepared as seed light, and the seed light is divided into plural beams and they are made to be incident upon the plurality of solid state laser materials along the optical paths of the above-mentioned plural beams of laser light 12a to 12d, respectively. Thereby, the laser oscillation can be carried out so that the phases of the plural beams of laser light 12a to 12d can be synchronized with the phase of the seed light. This phase synchronization method is called an injection seeding method.

The phase synchronization can be implemented by using a system, such as a Talbot resonator configuration, for arranging the above-mentioned plurality of oscillating units so that a part of laser oscillating light generated by each of the plurality of oscillating units can be mixed into other oscillating units and the plurality of oscillating units oscillate at the same phase.

When the phase synchronization is thus carried out, the plural beams of laser light outputted from the solid-state-laser pumping module can be made to be in phase with one another. Thereby, the whole of the plural beams of laser light can be handled as a single laser light output, and a high-power, high-beam-quality laser output can be obtained.

Fig. 9 is a diagram showing an example of the structure of a laser oscillator which uses the solid-state-laser pumping module shown in Fig. 7A or 7B, and is a side view of the solid-state-laser pumping module. The laser oscillator having this structure carries out laser oscillation by causing a single beam of laser light 12 to be incident upon the plurality of solid state laser materials 3A to 3D in succession while causing the single beam of laser light 12 to be total-reflected successively by a reflecting mirror 14.

A total reflection mirror 15 total-reflects the laser light 12 so as to introduce it into the solid state laser material 3A. A partial reflection mirror 16 reflects a part of the laser light 12 incident thereupon, and allows a remaining part of the laser light to pass therethrough and outputs it as output light.

In the figure, an antireflection coating 1 and structural components disposed under each of the plurality of solid state laser materials 3A to 3D are not shown for each of the plurality of solid state laser materials 3A to 3D so that a relationship between the plurality of solid state laser materials 3A to 3D and the laser light 12 can be easily recognized.

Next, the operation of the solid-state-laser pumping module in accordance with this embodiment of the present invention will be explained.

When each of the plurality of solid state laser materials 3A to 3D is pumped by the pumping light inputted thereto via the slab waveguide 2 and generates a gain, as mentioned above, laser light 12 reflected by the total reflection mirror 15 is incident upon the solid state laser material 3A.

When passing through the inside of the solid-state-laser-material 3A after being incident upon the solid-state-laser-material 3A, the laser light 12 increases in power. After that, the laser light is reflected by a not-shown total reflection coating 5 toward the reflecting mirror 14. After that, the laser light reflected by the total reflection coating 5 also increases in power when passing through the inside of the solid-state-laser-material 3A again.

The laser light 12 which then reaches the reflecting mirror 14 is reflected towards the solid state laser material 3B. The solid state laser material 3B increases the power of the incident laser light 12 in the same manner that the solid state laser material 3A does. The laser light 12 which has increased in power is then reflected by a not-shown total reflection coating 5 disposed in the solid state laser material 3B toward the reflecting mirror 14.

After further entering the other solid state laser materials 3C and 3D successively and also increasing in power in the same way, the laser light 12 is reflected by a not-shown total reflection coating 5 disposed in the solid state laser material 3D toward the partial reflection mirror 16.

The partial reflection mirror 16 reflects a part of the laser light 12 incident thereupon and guides it toward a direction opposite to the direction in which the laser light 12 travels from the total reflection coating to the partial reflection mirror during the above-mentioned process, i.e., a path extending from the solid-state-laser-material 3D to the solid state laser material 3A, and finally to the total reflection mirror 15.

As a result, laser oscillation is carried out through the path that is extending from the total reflection mirror 15, via the solid state laser material 3A, reflecting mirror 14, solid state laser material 3B, reflecting mirror 14, solid-state-laser-material 3C, reflecting mirror 14, and solid-state-laser-material 3D, to the partial reflection mirror 16.

When the solid-state-laser pumping module is so constructed that the plurality of solid state laser materials 3A to 3D are zigzag-arranged in an xy plane, as shown in Fig. 7B, reflecting mirrors 14 are disposed for the plurality of solid state laser materials 3A to 3D so that the laser light 12 reflected by the total reflection mirror 15 can be made to be successively incident upon the plurality of solid state laser materials 3A to 3D.

Then, the laser light 12 which laser-resonates in the plurality of solid state laser materials 3A to 3D, as mentioned above, emerges from the partial reflection mirror 16. In other words, the solid-state-laser pumping module operates as a laser oscillator which outputs power stored in the plurality of solid state laser materials 3A to 3D as a single beam of laser light 12.

When the solid-state-laser pumping module is constructed in this way, it can obtain a high-power laser output since the power stored in the plurality of solid state laser materials 3A to 3D can be outputted to outside the solid-state-laser pumping module as the single beam of laser light 12.

In above-mentioned embodiment 4, the example shown in Fig. 1 of above-mentioned embodiment 1 is used as each unit of the module including the plurality of solid state laser materials 3A to 3D. As an alternative, each unit of the module including the plurality of solid state laser materials 3A to 3D can have either the structure shown in Fig. 3 of above-mentioned embodiment 2, or the structure shown in any of Figs. 4 to 6 of above-mentioned embodiment 3.

### Industrial Applicability

As mentioned above, the solid-state-laser pumping module and laser oscillator in accordance with the present invention can be applied to a laser device for use in radars and a laser device for machining, which require a large laser light output, because they have an ability to reduce the temperature rise at the time of pumping of a thin disc type of laser material, and to acquire a high gain.

## Claims

1. A solid-state-laser pumping module comprising:
a plate-shaped laser gain member (3) for providing a gain generated by absorption of pumping light to laser light to amplify the laser light;
a pumping light propagation member (2) having a bonding surface portion optically bonded to a laser light incidence surface of said laser gain member, and for causing the pumping light to be incident upon said laser gain member via the bonding surface portion thereof;
a reflecting surface member (5) disposed on a surface of said laser gain member, which is opposite to said laser light incidence surface of said laser gain member, for reflecting the laser light which is incident upon said laser gain member via said light incidence surface, and which propagates through an inside of said laser gain member; and
a cooling member (7) for removing heat which is generated by said laser gain member and is transferred thereto via said reflecting surface member
**characterized in that**
said solid-state laser pumping module comprises a pumping light reflecting surface member (4) disposed on a lateral surface of the laser gain member, which is perpendicular to the laser light incidence surface of the laser gain member, for reflecting outgoing part of the pumping light which exists from said laser gain member, the pumping light being incident upon said laser gain member from the pumping light propagation member, towards the inside of said laser gain member.

2. The solid-state-laser pumping module according to claim 1, **characterized in that** the pumping light propagation member (2) has a cross-sectional area which is perpendicular to a direction in which the pumping light propagates through the pumping light propagation member, and which is formed so as to decrease with distance from an end surface of the pumping light propagation member (2), via which the pumping light from a pumping light source (10) is incident upon the pumping light propagation member, towards the bonding surface portion of the laser gain member.

3. The solid-state-laser pumping module according to claim 1, **characterized in** comprising a holding member (11) disposed between the pumping light propagation member and the laser gain member (3A) and optically bonded to these members, for causing the pumping light from said pumping light propagation member to be incident upon said laser gain member.

4. The solid-state-laser pumping module according to claim 1, **characterized in** comprising another pumping light propagation member (2b) disposed between the laser gain member (3) and the reflecting surface member (5), and optically bonded to said laser gain member via a bonding surface portion thereof, for causing pumping light to be incident upon said laser gain member via the bonding surface portion.

5. The solid-state-laser pumping module according to claim 1, **characterized in that** the pumping light propagation member (2) is optically bonded to a plurality of laser gain members (3A, 3B, 3C, 3D) via bonding surface portions thereof, respectively, and causes the pumping light to be incident upon said plurality of laser gain members via the bonding surface portions thereof.

6. A laser oscillator comprising:
a solid-state-laser pumping module (2, 3, 5, 7) including a plurality of plate-shaped laser gain members (3A, 3B, 3C, 3D) each for providing a gain generated by absorption of pumping light to laser light to amplify the laser light, a pumping light propagation member (2) having bonding surface portions optically and respectively bonded to laser light incidence surfaces of said plurality of laser gain members, for causing the pumping light to be incident upon said plurality of laser gain members via the bonding surface portions thereof, reflecting surface members (5) respectively disposed on surfaces of said plurality of laser gain members, which are opposite to said laser light incidence surfaces of said plurality of laser gain members, each for reflecting the laser light which is incident upon a corresponding one of said plurality of laser gain members via said light incidence surface, and which propagates through an inside of the corresponding one of said plurality of laser gain members, and a cooling member (7) for removing heat which is generated by said plurality of laser gain members and is transferred thereto via said reflecting surface member; and
an optical system (13, 14, 15, 16) for causing said laser light to be incident upon each of said plurality of laser gain members (3) of said solid-state-laser pumping module and then causing said laser light reflected by said each reflecting surface member (5) to be re-incident upon each of said plurality of laser gain members, to output laser-oscillated laser light,
**characterized in that**
said solid-state laser pumping module comprises a pumping light reflecting surface member (4) disposed on a lateral surface of each of the laser gain members, which is perpendicular to the laser light incidence surface of the laser gain members, for reflecting outgoing part of the pumping light which exists from said laser gain members, the pumping light being incident upon said laser gain members from the pumping light propagation member, towards the inside of said laser gain members.

7. The laser oscillator according to claim 6, **characterized in that** the optical system causes only a single beam of laser light be successively incident upon the plurality of laser gain members, and also causes the laser light reflected by each of the reflecting surface members (5) to be re-incident upon the corresponding one of said plurality of laser gain members, to oscillate laser light.

8. The laser oscillator according to claim 6, **characterized in that** said laser oscillator introduces plural beams of laser light into the plurality of laser gain members of the solid-state-laser pumping module, respectively, and the optical system outputs the plural beams of laser light which are respectively laser-oscillated by said plurality of laser gain members.

9. The laser oscillator according to claim 8, **characterized in that** said laser oscillator causes the plural beams of laser light which are respectively introduced into the plurality of laser gain members to be in phase with one another.

## Patentansprüche

1. Festkörperlaser-Pumpmodul, welches aufweist:
ein plattenförmiges Laserverstärkungsteil (3) zum Vorsehen einer Verstärkung für Laserlicht, die durch Absorption von Pumplicht erzeugt wird, um das Laserlicht zu verstärken;
ein Pumplicht-Ausbreitungsteil (2) mit einem Klebflächenbereich, der optisch mit einer Laserlicht-Auftrefffläche des Laserverstärkungsteils verklebt ist, und zum Bewirken, dass das Pumplicht über den Klebflächenbereich des Laserverstärkungsteils auf dieses auftrifft;
ein Reflexionsflächenteil (5), das auf einer Oberfläche des Laserverstärkungsteils angeordnet ist und sich gegenüber der Laserlicht-Auftrefffläche des Laserverstärkungsteils befindet, zum Reflektieren des Laserlichts, das über die Lichtauftrefffläche auf das Laserverstärkungsteil auftrifft und das sich durch eine Innenseite des Laserverstärkungsteils ausbreitet; und
ein Kühlteil (7) zum Entfernen von Wärme, die von dem Laserverstärkungsteil erzeugt wird und über das Reflexionsflächenteil zu diesem übertragen wird,
**dadurch gekennzeichnet, dass**
das Festkörperlaser-Pumpmodul ein Pumplicht-Reflexionsflächenteil (4) aufweist, das sich auf einer seitlichen Oberfläche des Laserverstärkungsteils befindet und senkrecht zu der Laserlicht-Auftrefffläche des Laserverstärkungsteils ist, zum Reflektieren des herausgehenden Teils des Pumplichts, das aus dem Laserverstärkungsteil heraustritt, wobei das Pumplicht von dem Pumplicht-Ausbreitungsteil zu der Innenseite des Laserverstärkungsteils hin auf dieses auftrifft.

2. Festkörperlaser-Pumpmodul nach Anspruch 1, **dadurch gekennzeichnet, dass** das Pumplicht-Ausbreitungsteil (2) eine Querschnittsfläche hat, die senkrecht zu einer Richtung ist, in der das Pumplicht sich durch das Pumplicht-Ausbreitungsteil ausbreitet, und die so ausgebildet ist, dass sie mit dem Abstand von einer Endfläche des Pumplicht-Ausbreitungsteils (2) abnimmt, über die das Pumplicht von einer Pumplichtquelle (10) auf das Pumplicht-Ausbreitungsteil auftrifft, zu dem Klebflächenbereich des Laserverstärkungsteils hin.

3. Festkörperlaser-Pumpmodul nach Anspruch 1, **dadurch gekennzeichnet, dass** es ein Halteteil (11) aufweist, das sich zwischen dem Pumplicht-Ausbreitungsteil und dem Laserverstärkungsteil (3A) befindet und optisch mit diesen Teilen verklebt ist, zum Bewirken, dass das Pumplicht von dem Pumplicht-Ausbreitungsteil auf das Laserverstärkungsteil auftrifft.

4. Festkörperlaser-Pumpmodul nach Anspruch 1, **dadurch gekennzeichnet, dass** es ein anderes Pumplicht-Ausbreitungsteil (2b) aufweist, das sich zwischen dem Laserverstärkungsteil (3) und dem Reflexionsflächenteil (5) befindet und optisch mit dem Laserverstärkungsteil über einen Klebflächenbereich hiervon verklebt ist, zum Bewirken, dass Pumplicht über den Klebflächenbereich auf das Laserverstärkungsteil auftrifft.

5. Festkörperlaser-Pumpmodul nach Anspruch 1, **dadurch gekennzeichnet, dass** das Pumplicht-Ausbreitungsteil (2) optisch mit mehreren Laserverstärkungsteilen (3A, 3B, 3C, 3D) jeweils über Klebflächenbereiche hiervon verklebt ist und bewirkt, dass das Pumplicht über die Klebflächenbereiche der mehreren Laserverstärkungsteile auf diese auftrifft.

6. Laseroszillator, welcher aufweist:
ein Festkörperlaser-Pumpmodul (2, 3, 5, 7) enthaltend mehrere plattenförmige Laserverstärkungsteile (3A, 3B, 3C, 3D) jeweils zum Vorsehen einer Verstärkung für Laserlicht, die durch Absorption von Pumplicht erzeugt wird, um das Laserlicht zu verstärken, ein Pumplicht-Ausbreitungsteil (2) mit Klebflächenbereichen, die jeweils optisch mit Laserlicht-Auftreffflächen der mehreren Laserverstärkungsteile verklebt sind, zum Bewirken, dass das Pumplicht über die Klebflächenbereiche der mehreren Laserverstärkungsteile auf diese auftrifft, Reflexionsflächenteile (5), die jeweils auf Oberflächen der mehreren Laserverstärkungsteile angeordnet sind und gegenüber den Laserlicht-Auftreffflächen der mehreren Laserverstärkungsteile sind, jedes zum Reflektieren des Laserlichts, das auf ein entsprechendes der mehreren Laserverstärkungsteile über die Lichtauftrefffläche auftrifft, und das sich durch eine Innensite des entsprechenden der mehreren Laserverstärkungsteile ausbreitet, und ein Kühlteil (7) zum Entfernen von Wärme, die von den mehreren Laserverstärkungsteilen erzeugt und zu diesem über das Reflexionsflächenteil übertragen wird; und
ein optisches System (13, 14, 15, 16) zum Bewirken, dass das Laserlicht auf jedes der mehreren Laserverstärkungsteile (3) des Festkörperlaser-Pumpmoduls auftrifft, und dann zum Bewirken,
dass das von jedem Reflexionsflächenteil (5) reflektierte Laserlicht wieder auf jedes der mehreren Laserverstärkungsteile auftrifft, um laseroszilliertes Laserlicht auszugeben,
**dadurch gekennzeichnet, dass**
das Festkörperlaser-Pumpmodul ein Pumplicht-Reflexionsflächenteil (4) aufweist, das sich auf einer seitlichen Oberfläche von jedem der Laserverstärkungsteile befindet und senkrecht zu der Laserlicht-Auftrefffläche der Laserverstärkungsteile ist, zum Reflektieren des herausgehenden Teils des Pumplichts, das aus den Laserverstärkungsteilen austritt, wobei das Pumplicht von dem Pumplicht-Ausbreitungsteil zu dem Inneren der Laserverstärkungsteile hin auf diese auftrifft.

7. Laseroszillator nach Anspruch 6, **dadurch gekennzeichnet, dass** das optische System bewirkt, dass nur ein einzelner Strahl des Laserlichts aufeinander folgend auf die mehreren Laserverstärkungsteile auftrifft, und auch bewirkt, dass das von jedem der Reflexionsflächenteile (5) reflektierte Laserlicht wieder auf das entsprechende der Laserverstärkungsteile auftrifft, um Laserlicht zu oszillieren

8. Laseroszillator nach Anspruch 6, **dadurch gekennzeichnet, dass** der Laseroszillator mehrere Laserlichtstrahlen jeweils in die mehreren Laserverstärkungsteile des Festkörperlaser-Pumpmoduls einführt und das optische System die mehreren Laserlichtstrahlen, die jeweils durch die mehreren Laserverstärkungsteile laseroszilliert sind, ausgibt.

9. Laseroszillator nach Anspruch 8, **dadurch gekennzeichnet, dass** der Laseroszillator bewirkt, dass die mehreren Laserlichtstrahlen, die jeweils in die mehreren Laserverstärkungsteile eingeführt werden, miteinander in Phase sind.

## Revendications

1. Module de pompage laser à l'état solide, comprenant :
- un élément de gain laser (3) en forme de plaque, destiné à fournir un gain généré par absorption de lumière de pompage à une lumière laser afin d'amplifier la lumière laser ;
- un élément de propagation de lumière de pompage (2) ayant une portion de surface de liaison, couplée optiquement à une surface d'incidence de lumière laser dudit élément de gain laser, et destiné à faire en sorte que la lumière de pompage soit incidente sur ledit élément de gain laser par l'intermédiaire de la portion de surface de liaison de celui-ci ;
- un élément de surface réfléchissante (5) disposé sur une surface dudit élément de gain laser, laquelle est opposée à ladite surface d'incidence de lumière laser dudit élément de gain laser, destiné à réfléchir la lumière laser qui est incidente sur ledit élément de gain laser par l'intermédiaire de ladite surface d'incidence de lumière et qui se propage à travers un intérieur dudit élément de gain laser ; et
- un élément de refroidissement (7) destiné à enlever la chaleur qui est générée par ledit élément de gain laser et est transférée à cet élément de refroidissement par l'intermédiaire dudit élément de surface réfléchissante ;
**caractérisé en ce que**
ledit module de pompage laser à l'état solide comprend un élément de surface réfléchissante de lumière de pompage (4) disposé sur une surface latérale de l'élément de gain laser, qui est perpendiculaire à la surface d'incidence de lumière laser de l'élément de gain laser, destiné à réfléchir la partie sortante de la lumière de pompage qui soit en provenance dudit élément de gain laser, la lumière de pompage étant incidente sur ledit élément de gain laser depuis l'élément de propagation de lumière de pompage, vers l'intérieur dudit élément de gain laser.

2. Module de pompage laser à semi-conducteurs selon la revendication 1, **caractérisé en ce que** l'élément de propagation de lumière de pompage (2) a une section transversale qui est perpendiculaire à une direction dans laquelle la lumière de pompage se propage à travers l'élément de propagation de lumière de pompage, et qui est formée de manière à diminuer en s'éloignant d'une surface d'extrémité de l'élément de propagation de lumière de pompage (2), par l'intermédiaire de laquelle la lumière de pompage provenant d'une source de lumière de pompage (10) est incidente sur l'élément de propagation de lumière de pompage, vers la portion de surface de liaison de l'élément de gain laser.

3. Module de pompage laser à semi-conducteurs selon la revendication 1, **caractérisé en ce qu'**il comprend un élément de maintien (11) disposé entre l'élément de propagation de lumière de pompage et l'élément de gain laser (3A) et couplé optiquement à ces éléments, destiné à faire en sorte que la lumière de pompage provenant dudit élément de propagation de lumière de pompage soit incidente sur ledit élément de gain laser.

4. Module de pompage laser à semi-conducteurs selon la revendication 1, **caractérisé en ce qu'**il comprend un autre élément de propagation de lumière de pompage (2b) disposé entre l'élément de gain laser (3) et l'élément de surface réfléchissante (5), et couplé optiquement audit élément de gain laser par l'intermédiaire d'une portion de surface de liaison dont il est munie, destiné à faire en sorte que la lumière de pompage soit incidente sur ledit élément de gain laser par l'intermédiaire de la portion de surface de liaison.

5. Module de pompage laser à semi-conducteurs selon la revendication 1, **caractérisé en ce que** l'élément de propagation de lumière de pompage (2) est couplé optiquement à une pluralité d'éléments de gain laser (3A, 3B, 3C, 3D) par l'intermédiaire de portions de surface de liaison dont il est munies, respectivement, et fait en sorte que la lumière de pompage soit incidente sur ladite pluralité d'éléments de gain laser, par l'intermédiaire des portions de surface de liaison dont il est munies.

6. Oscillateur laser comprenant :
un module de pompage laser à l'état solide (2, 3, 5, 7) incluant une pluralité d'éléments de gain laser (3A, 3B, 3C, 3D) en forme de plaque, chacun étant destiné à fournir un gain, généré par absorption de lumière de pompage, à la lumière laser, afin d'amplifier la lumière laser, un élément de propagation de lumière de pompage (2) ayant des portions de surface de liaison, couplées optiquement et respectivement à des surfaces d'incidence de lumière laser de ladite pluralité d'éléments de gain laser, destiné à faire en sorte que la lumière de pompage soit incidente sur ladite pluralité d'éléments de gain laser par l'intermédiaire des portions de surface de liaison dont il est munies, des éléments de surface réfléchissante (5) disposés respectivement sur des surfaces de ladite pluralité d'éléments de gain laser qui sont opposées auxdites surfaces d'incidence de lumière laser de ladite pluralité d'éléments de gain laser, chacun étant destiné à réfléchir la lumière laser qui est incidente sur un élément correspondant de ladite pluralité d'éléments de gain laser par l'intermédiaire de ladite surface d'incidence de lumière et qui se propage à travers un intérieur de l'élément correspondant de ladite pluralité d'éléments de gain laser, et un élément de refroidissement (7) destiné à enlever la chaleur qui est générée par ladite pluralité d'éléments de gain laser et est transférée vers cet élément de refroidissement par l'intermédiaire dudit élément de surface réfléchissante ; et
un système optique (13, 14, 15, 16) destiné à faire en sorte que ladite lumière laser soit incidente sur chaque élément de ladite pluralité d'éléments de gain laser (3) dudit module de pompage laser à l'état solide et faisant ensuite en sorte que ladite lumière laser réfléchie par chaque élément de surface réfléchissante soit incidente de nouveau sur chaque élément de ladite pluralité d'éléments de gain laser, afin de produit en sortie une lumière laser mise en oscillation ;
**caractérisé en ce que**
ledit module de pompage laser à l'état solide comprend un élément de surface réfléchissante de lumière de pompage (4) disposé sur une surface latérale de chacun des éléments de gain laser, qui est perpendiculaire à la surface d'incidence de lumière laser des éléments de gain laser, destiné à réfléchir la partie sortante de la lumière de pompage qui soit en provenance desdits éléments de gain laser, la lumière de pompage étant incidente sur lesdits éléments de gain laser depuis l'élément de propagation de lumière de pompage, vers l'intérieur desdits éléments de gain laser.

7. Oscillateur laser selon la revendication 6, **caractérisé en ce que** le système optique fait en sorte qu'uniquement un seul faisceau de lumière laser soit incidente successivement sur la pluralité d'éléments de gain laser, et fait également en sorte que la lumière laser réfléchie par chacun des éléments de surface réfléchissante (5) soit incidente de nouveau sur l'élément correspondant de ladite pluralité d'éléments de gain laser, afin de faire osciller la lumière laser.

8. Oscillateur laser selon la revendication 6, **caractérisé en ce que** ledit oscillateur laser introduit plusieurs faisceaux de lumière laser dans la pluralité d'éléments de gain laser du module de pompage laser à l'état solide, respectivement, et que le système optique produit en sortie lesdits plusieurs faisceaux de lumière laser qui sont respectivement mis en oscillation laser par ladite pluralité d'éléments de gain laser.

9. Oscillateur laser selon la revendication 8, **caractérisé en ce que** ledit oscillateur laser fait en sorte que lesdits plusieurs faisceaux de lumière laser qui sont respectivement introduits dans la pluralité d'éléments de gain laser soient en phase l'un avec l'autre.
